**Europäisches Patentamt**

**European Patent Office**

**Office européen des brevets**

(19)

(11) Veröffentlichungsnummer: **0 011 226**
**A1**

# (12) EUROPÄISCHE PATENTANMELDUNG

(21) Anmeldenummer: **79104354.0**

(22) Anmeldetag: **07.11.79**

(51) Int. Cl.³: **B 41 F 13/18**
**F 16 C 13/00**

(30) Priorität: **13.11.78 DE 2849202**

(43) Veröffentlichungstag der Anmeldung:
**28.05.80 Patentblatt 80.11**

(84) Benannte Vertragsstaaten:
**CH DE FR GB IT**

(71) Anmelder: **Albert-Frankenthal AG.**
**Postfach 247**
**D-6710 Frankenthal(DE)**

(72) Erfinder: **Niedermaier, Arnold**
**Frankenthalerstrasse 21**
**Beindersheim(DE)**

(72) Erfinder: **Maier, Peter**
**Schillingstrasse 1**
**Worms(DE)**

(74) Vertreter: **Munk, Ludwig, Dipl.-Ing.**
**Maximilianstrasse 71**
**D-8900 Augsburg(DE)**

(54) **Zylinder für eine Druckmaschine.**

(57) Um bei einem Druckmaschinenzylinder mit einen rohrförmig ausgebildeten Mantel (8), der auf einem durchgehenden Kern (10) abgestützt ist, mit welchem er durch zwei in radialer Richtung drucksteife Gelenkverbindungen (12,21) verbunden ist, einen einfachen und dennoch funktionssicheren Aufbau zu gewährleisten, soll der Mantel (8) ausschließlich durch die beiden Gelenkverbindungen (12,21), die einen gegenüber der Mantellänge verhaältnismäßig kleinen gegenseitigen Abstand aufweisen, auf dem Kern (10) abgestützt und ausschließlich hierüber mittels der im Bereich der Maschinenseitenwandungen (1) auf den Kern (10) aufbringbaren Stellkräfte (4) an den zugeordneten Zylinder (2) anpreßbar sein.

FIG 1

**Dipl.-Ing. Ludwig Munk**

Patentanwalt

0011226

89 AUGSBURG,
Maximilianstraße 71
Telefon (0821) 519622

3. Okt. 1979

┌ Dipl.-Ing. Ludwig Munk, Maximilianstr. 71, 8000 Augsburg ┐

L

Konto:
Fürst-Fugger Bank Kto. Nr. 00 05459 003

Deutsche Bank Augsburg 4150790

Postscheckamt München
Konto-Nr. 48820-808

# Zylinder für eine Druckmaschine

Die Erfindung betrifft einen Zylinder für eine Druckmaschine, insbesondere einen Presseur für eine Tiefdruckmaschine, mit einem rohrförmig ausgebildeten
Mantel, der auf einem durchgehenden Kern abgestützt
und unabhängig von diesem verformbar ist, mit welchem
er durch zwei symmetrisch zur Maschinenmitte angeordnete, in radialer Richtung drucksteife Gelenkverbindungen, die einen zum Ausgleich der unterschiedlichen
Verformungen von Mantel und Kern ausreichenden Schwenkwinkelbereich besitzen, verbunden ist und der die Kräfte zum Anpressen des Mantels an einen hiermit zusammenwirkenden Zylinder aufnimmt.

Beim Zusammenwirken von zwei Zylindern ist es zur Erzielung eines zufriedenstellenden Arbeitsergebnisses
erwünscht, trotz der nicht zu vermeidenden Durchbiegung eine über der gesamten Zylinderlänge praktisch
gleichmäßige, linienförmige Anlage zu erzielen. Dieses Problem wurde in der Vergangenheit vielfach aufgegriffen, ohne daß hierfür eine zufriedenstellende Lösung gefunden wurde.

Aus der DE-Gbm-Schrift 1 963 823 ist ein Presseur für eine Tiefdruckmaschine bekannt, bei dem der rohrförmige Mantel durch zwei eingepreßte, massive Stützringe mit der durchgehenden Achse verbunden ist. Die genannten Stützringe, die zur Vermeidung von Taumelbewegungen im Bereich der äußeren , abstützungslosen Mantelbereiche einen gewissen Abstand benötigen, bewirken aufgrund ihrer massiven Ausbildung und ihres Preßsitzes eine praktisch feste Verbindung zwischen Mantel und Achse. Es ist daher zu erwarten, daß bei einer Verformung der Achse der Mantel in derselben Richtung wie die durchgehende Achse verformt wird. Zur Erzielung einer über der gesamten Länge gleichmäßigen, linienförmigen Anlage des Mantels an den hiermit zusammenwirkenden Zylinder wäre jedoch eine Verformung des Mantels in genau umgekehrter Richtung erforderlich, da der hiermit zusammenwirkende Zylinder infolge der hierauf übertragenen Streckenlast praktisch in umgekehrter Richtung verformt wird wie die den Mantel durchsetzende Achse. Das eingangs erwähnte Ziel, eine über der gesamten Länge gleichmäßige, linienförmige Anlage des Mantels an den hiermit zusammenwirkenden Zylinder zu erzielen, wird bei der bekannten Anordnung demnach nicht erreicht. Es besteht daher die Gefahr, daß es im Bereich der seitlichen Zylinderstirnseiten zu einer übermäßigen Pressung und im Bereich der Zylindermitte zu einem gegenseitigen Abheben kommt. Dieser Erscheinung wurde vielfach durch eine ballige Ausbildung der Manteloberfläche zu begegnen versucht. Auch diese Versuche haben sich je-

- 3 -                                    0011226

doch als nicht zufriedenstellend erwiesen.

Aus der US-PS 36 85 443 ist zwar eine Anordnung gattungsgemäßer Art bekannt, bei der der Mantel durch zwei Gelenklager mit einem durchgehenden Kern verbunden ist. Die genannten Gelenklager sitzen hierbei jedoch ganz außen im Bereich der Zylinderstirnseiten und dienen offenbar lediglich der Zentrierung und Drehlagerung des Mantels. Vom Kern aufzunehmende Anpreßkräfte können hierüber nicht auf den Mantel übertragen werden. Vielmehr ist bei der bekannten Anordnung zum Anpressen des Mantels an den hiermit zusammenwirkenden Zylinder eine zwischen Mantel und Kern eingebaute Druckkammer vorgesehen, die mit Druckflüssigkeit oder dergleichen beaufschlagbar sein soll. Sobald diese Druckkammer mit Druckmedium beaufschlagt wird, werden der Kern und der Mantel voneinander weggebogen, was dann zu einer Abstützung und damit zu einer Anlage des Mantels an den hiermit zusammenwirkenden Zylinder führt. Nachteilig ist jedoch der durch den Einbau der Druckkammer verursachte Aufwand und die hiermit verbundene Einschränkung konstruktiver Art. Der genannte Druckraum ist ersichtlich auf die dem mit dem Mantel zusammenwirkenden Zylinder zugewandte Hälfte des Ringraums zwischen Kern und Mantel zu beschränken. Um eine derartige Fixierung jedoch zu ermöglichen, kann eine der bekannten Anordnung folgende Ausführung niemals mit einem als drehende Welle ausgebildeten Kern arbeiten, sondern ist auf einen als feststehende Achse ausgebildeten Kern beschränkt.

Außerdem sind bei der bekannten Anordnung zur Abdichtung des Druckraums Bewegungsdichtungen erforderlich.

Diese unterliegen jedoch bekanntlich einem rasanten Verschleiß, so daß die zu erwartende Lebensdauer sehr gering ist, was einen nicht unbeträchtlichen Wartungs- und Reparaturaufwand erfordert. Ganz abgesehen davon führt der genannte, nicht zu vermeidende Verschleiß im Bereich der relativ zueinander bewegten Oberflächen zu einer nicht vermeidbaren Erwärmung des Mantels, was sich negativ auf den elastischen Mantelbezug auswirkt. Ein weiterer Nachteil der bekannten Anordnung ist darin zu sehen, daß hierbei der in der Druckkammer jeweils herrschende Druck überwacht werden muß, was ebenfalls einen nicht unbeträchtlichen Aufwand erfordert, ganz abgesehen von dem das Vorhandensein der Druckquelle und der entsprechenden Versorgungsleitungen betreffenden Aufwand. Sofern zur Begrenzung der Druckkammer in axialer Richtung sich erstreckende Dichtleisten und stirnseitig angeordnete Dichtscheiben vorgesehen sind, ist zu befürchten, daß diese nur solange eine exakte Abdichtung der Druckkammer gewährleisten, wie eine saubere mantelseitige Anlage gewährleistet ist. Sobald jedoch der Mantel und der Kern in der an sich gewünschten Weise verformt werden, geht diese Anlage verloren, so daß sich Spalte und damit Leckverluste ergeben, womit die erwünschte Wirkung verloren geht. Offenbar aus diesem Grund ist in der genannten US-PS 36 85 443 auch eine weitere, mit einem zwischen Mantel und Kern eingebauten Drucksack arbeitende Anordnung vorgeschlagen. Ein derartiger Drucksack liegt jedoch praktisch mit seiner gesamten, mantelseitigen Oberfläche am rotierenden Mantel an, was trotz einer aufwendigen Schmierung und dergleichen einen nicht unbeträchtlichen Verschleiß erwarten läßt.

Ausgehend von einem derartigen Stand der Technik ist es daher die Aufgabe der vorliegenden Erfindung einen Zylinder eingangs erwähnter Art unter Vermeidung der Nachteile der bekannten Anordnungen mit einfachen Mitteln so zu verbessern, daß sich sein Mantel unabhängig von der den Mantel durchsetzenden Achse auf die Biegelinie des hiermit zusammenwirkenden Zylinders einstellen kann, wobei gleichzeitig ein einfacher Aufbau und damit eine kostengünstige Herstellung als auch eine hohe Funktionssicherheit gewährleistet sein sollen.

Diese Aufgabe wird erfindungsgemäß dadurch gelöst, daß der Mantel ausschließlich durch die beiden Gelenkverbindungen, die lediglich einen solchen, gegenüber der Mantellänge verhältnismäßig kleinen gegenseitigen Abstand aufweisen, daß Taumelbewegungen der abstützungslosen Mantelränder vermieden sind, auf dem Kern abgestützt und ausschließlich hierüber mittels der im Bereich der Maschinenseitenwand auf den Kern aufbringbaren Stellkräfte an den zugeordneten Zylinder anpreßbar ist.

Die Enden des Mantels, die bei einer entsprechenden Durchbiegung des Gegenzylinders normalerweise erhöhtem Kantendruck ausgesetzt sind, sind hier in vorteilhafter Weise abstützungsfrei und können daher bei einem Kraftangriff von außen leicht unabhängig vom Kern von diesem weg gebogen werden. Im Bereich der Mantelmitte, wo zur Bewerkstelligung einer sauberen Anlage am Gegenzylinder Anpreßkräfte auf dem Mantel auszuüben sind, ist hier der Mantel durch die in radialer Richtung drucksteifen Gelenkverbindungen am durchgehenden Kern abgestützt und somit mittels dessen an den mit ihm zusammenwirkenden Zylinder anpreßbar. Da der Abstand der beiden Gelenkverbindungen
gegenüber der Mantellänge verhältnismäßig klein, d. h.
nur so groß ist, daß Taumelbewegungen der abstützungslosen Mantelränder vermieden sind, stellt sich der
Mantel hier vereinfacht praktisch als mittig abgestützter, nach beiden Seiten über die Abstützung auskragender Balken dar, der an seinen praktisch abstützungslosen Enden eine äußere, hier durch den obengenannten Kantendruck gebildete Belastung aufnimmt und
daher mittels der mittig angreifenden Stützkräfte sauber an den hiermit zusammenwirkenden Zylinder anpreßbar ist. Das ist bei den bekannten Anordnungen nicht
der Fall, da im Falle der US-PS 36 85 443 die Enden
des Mantels nicht abstützungsfrei sind und da im Falle
der DE-Gbm-Schrift 1 963 823 keine Gelenkverbindung
von Mantel und Kern vorgesehen ist.

Zweckmäßige Ausgestaltungen und vorteilhafte Weiterbildungen der übergeordneten Maßnahmen sind in den
Ansprüchen 2 bis 9 gekennzeichnet.

Nachstehend sind zwei Ausführungsbeispiele der Erfindung anhand der Zeichnung näher erläutert.

Hierbei zeigen:

Figur 1    ein erstes Ausführungsbeispiel mit als Ge-
           lenklager ausgebildeten Gelenkverbindungen
           anhand eines mit einem Formzylinder einer
           Tiefdruckmaschine zusammenwirkenden Presseurs
           und

Figur 2    ein Ausführungsbeispiel für eine als Flachfederelement ausgebildete Gelenkverbindung.

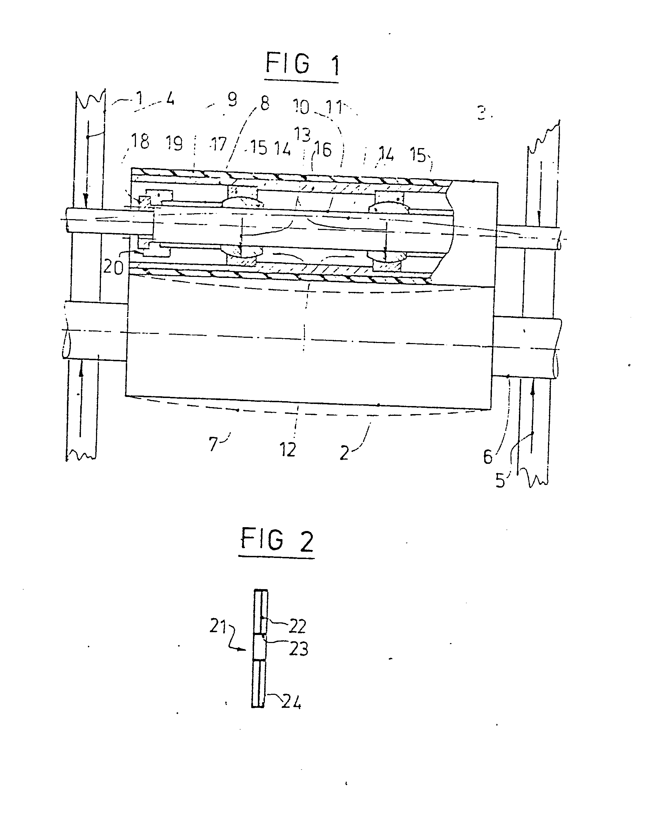

In einer Tiefdruckmaschine, die in Figur 1 durch ihre Seitenwände 1 angedeutet ist, wird die zu bedruckende Papierbahn zwischen einem Formzylinder 2 und einem hieran anliegenden Presseur 3 hindurchgeführt. Der Formzylinder 2 ist normalerweise angetrieben, der Presseur 3 wird hiervon einfach mitgenommen. Der Presseur 3 wird während des Betriebs an den Formzylinder 2 angepreßt. Die im Bereich der Lager eingeleiteten Anpreßkräfte sind durch die Pfeile 4 angedeutet. Die im Bereich der Lagerung des Formzylinders 2 wirkenden Gegenkräfte werden durch die Pfeile 5 verdeutlicht. Der im Bereich seiner seitlichen Lagerstummel 6 gelagerte und durch den Presseur 3 in Form einer Streckenlast belastete Formzylinder 2 biegt sich in seinem mittleren Bereich    durch, wie im dargestellten Ausführungsbeispiel anhand der gestrichelt eingezeichneten, hier aus Darstellungsgründen übertrieben nach unten durchgebogenen Biegelinie 7 angedeutet ist.

Der als Ganzes mit 3 bezeichnete Presseur besteht aus einem etwa durch ein Stahlrohr gebildeten Mantel 8, der mit einem durch eine Elastomerschicht gebildeten Bezug 9 versehen ist. Der Mantel 8 ist an zwei Stellen auf einer durchgehenden Achse 10 abgestützt, die ihrerseits in den Maschinenseitenwänden 1 gelagert ist. Die Achse 10 wird unter der Wirkung der im Bereich der Gehäuselagerung eingeleiteten, bei 4 angedeuteten Anpreßkräfte deformiert. Die entsprechende Biegelinie ist bei 11 angedeutet. Diese ist gegenüber der Biegelinie 7 des Formzylinders 2 umgekehrt ausgewölbt. Zur Verbindung des Mantels 8 mit der durchgehenden Achse 10 sind zwei jeweils als Ganzes mit 12 bezeichnete Gelenklager vorgesehen, die zweckmäßig symmetrisch zur Maschinenmitte angeordnet sind. Die beiden Gelenklager 12 ermöglichen bei Drucksteifigkeit in radialer Richtung eine Verschwenkbarkeit zwischen Achse 10 und Mantel 8, so daß der Mantel 8 unter der Wirkung der im Bereich der Gelenklager 12 hierauf übertragenen, bei 13 angedeuteten Anpreßkräfte der Biegelinie 7 des Formzylinders 2 unabhängig von der Achse 10 folgen kann, so daß sich die gegenüber der Durchbiegung des Formzylinders 2 gegenläufige Durchbiegung der Achse 10 nicht negativ auf die Anlage zwischen dem Formzylinder 2 und dem Außenumfang des Presseurs 3 auswirken kann. Die durch die am Mantel 8 angreifende äußere Streckenlast und die im Bereich der Gelenklager 12 aufgenommenen Stütz- bzw. Anpreßkräfte 13 erzielbare Biegelinie des Mantels 8 hängt ersichtlich von Form- und Materialkonstanten, wie beispielsweise Lagerabstand, Manteldurchmesser, Manteldicke etc., ab. Diese Werte werden vorteilhaft so gewählt, daß bei einem zum Verhindern von Taumelbewegungen der Mantelenden ausreichenden Lagerabstand von der Zylindermitte die beim normalen durch Exzenterbuchsen bewerkstelligten Anstellen des Presseurs 3 an den Formzylinder 2 zu erwartenden Biegelinien von Mantel 8 und Formzylinder 2 automatisch übereinstimmen, womit ohne weitere Maßnahmen eine linienförmige Berührung erreicht ist. Im dargestellten Ausführungsbeispiel sind die Gelenklager 12 so angeordnet, daß der Mantel 8 hierdurch in praktisch drei etwa gleich lange Bereiche unterteilt wird, was bei vielen Zylinderausführungen einen guten Näherungswert darstellt.

Im dargestellten Ausführungsbeispiel bestehen die Gelenklager 12 jeweils aus zwei Lagerringen 14 bzw. 15 von denen der hier auf der Achse 10 sitzende Lagerring 1 eine konvexe und der hier am Mantel 8 anliegende Lagerring 15 eine dementsprechend konkave radiale Gleitfläche aufweist. Im dargestellten Ausführungsbeispiel soll die Achse 10 ihrerseits drehbar gelagert sein. In diesem Fall findet daher im Bereich der Gleitflächen der Lagerringe 14 bzw. 15 keine nennenswerte Drehbewegung statt. Es genügt daher in diesem Fall, wenn die Lagerringe 14 bzw. 15 im Bereich ihrer Gleitflächen einfach eine Notlaufbeschichtung aufweisen. Eine weitere Schmierung ist dabei nicht erforderlich. Es wäre aber auch ohne weiteres denkbar, die Achse 10 in Drehrichtung starr zu lagern. In einem derartigen Fall erweist es sich, wie Versuche gezeigt haben, als besonders zweckmäßig, die Gelenklager 12 als hydrostatische Lager auszubilden. Hierzu wird der Spalt zwischen den Gleitflächen der jeweils zusammenwirkenden Lagerringe 14 bzw. 15 einfach mit Drucköl versorgt, das beispielsweise durch eine Bohrung in der Achse 10 und entsprechende, die Lagerringe 14 durchsetzende Zapfbohrungen herangeführt wird. Das in den Raum zwischen dem Mantel 8 und der Achse 10 austretende Lecköl dient dabei in vorteilhafter Weise zur Kühlung des Mantels 8, so daß die Temperatur des durch Walkarbeit relativ stark beanspruchten Bezugs 9 in vorteilhafter Weise niedrig gehalten werden kann. Die Ölrückführung kann ebenfalls über Bohrungen in der Achse 10 erfolgen. Die Stirnseiten des Mantels 8 sind in diesem Fall abzudeckeln.

Die Gelenklager 12 sind im dargestellten Ausführungsbeispiel einerseits durch einen mittleren, radial nach innen vorstehenden, Anschlagkanten für die Lagerringe 15 bildenden Bund 16 des Mantels 8 und andererseits durch jeweils eine seitlich auf die Achse 10 aufgesteckte, eine der Anschlagfläche des Bundes 16 jeweils gegenüberliegende Anschlagfläche für den anderen Lagerring
14 bildende Büchse 17 in axialer Richtung gesichert.

Der Bund 16 kann einfach angedreht sein. Die Büchsen 17
sind im dargestellten Ausführungsbeispiel durch jeweils
einen im Bereich der Mantelstirnseiten auf der Achse 10
festgelegten Flanschring 18 gegen Herausfallen gesichert. Diese Büchsen 17 können in vorteilhafter Weise
auch dazu verwendet werden, die bei der Vormontage des
Presseurs 3 zwischen den Mantel 8 und die Achse 10 einzuschiebenden Gelenklager 12 sicher in Stellung zu bringen. Hierzu sind die Büchsen 17 im Bereich ihres in der
gezeichneten Betriebsstellung vom jeweiligen Gelenklager
12 abgewandten Endes mit einer radialen Verstärkung 19
versehen, deren Stirnseite 20 in vorteilhafter Weise so
ausgebildet ist, daß diese genau auf die Stirnseite des
zugeordneten Gelenklagers 12 paßt, was eine verkantungsfreie Montage der hier aus zwei gegeneinander bewegbaren Lagerringen 14 bzw. 15 bestehenden Gelenklager 12
ermöglicht. Hierzu werden die Büchsen 17 lediglich so
auf die Achse 10 aufgesteckt, daß die radiale Verstärkung 19 zur Anlage an dem zu montierenden Gelenklager
12 kommt. Im dargestellten Ausführungsbeispiel ist der
Lagerring 14 zur Bewerkstelligung einer ausreichenden
Beweglichkeit des Lagerrings 15 etwas breiter als dieser
ausgebildet. Die radiale Verstärkung 19 ist hier dementsprechend mit einer stirnseitigen Eindrehung versehen,
in welche in der dargestellten Betriebsstellung der
Flanschring 18 eingreifen kann. Die radiale Verstärkung
19 kann einfach an die Büchse 17 angedreht sein. Im dargestellten Ausführungsbeispiel ist die radiale Verstärkung 19 als separater Ring ausgebildet, der mit der Büchse
17 verschraubt ist. Der Sitzbereich der Lagerringe 14 bzw.

15 gegenüber der Achse 10 bzw. dem Mantel 8 ist hier zweckmäßig als Schiebepassung ausgebildet, so daß ein spielfreier Sitz und dennoch eine leichte Montage gewährleistet sind.

Vorstehend ist zwar ein besonders bevorzugtes Ausführungsbeispiel der Erfindung näher erläutert, ohne daß jedoch hiermit eine Beschränkung verbunden sein soll. Vielmehr stehen dem Fachmann eine Reihe von Möglichkeiten zur Verfügung, um den allgemeinen Gedanken der Erfindung an die Verhältnisse des Einzelfalls anzupassen.

So wäre es beispielsweise auch möglich, die Stüzelemente, wie aus Figur 2 ersichtlich ist, als Flachfederelemente 21 mit einem ringförmigen Steg 22 auszubilden. Derartige Flachfederelemente ermöglichen wie die Gelenklager 12 eine ausreichende Drucksteifigkeit in radialer Richtung. Gleichzeitig ist jedoch infolge der elastischen Verformbarkeit des Stegs 22 eine quasi-gelenkige Krafteinleitung sichergestellt, d. h. es ist bezüglich der Zylindermittellinie ausreichend Schwenkmöglichkeit vorhanden, so daß die Verformung der Achse 10 nicht behindert wird. Der Steg 22 läßt sich auf einfache Weise so bemessen, daß die Momentbelastung des Mantelrohrs in vernachlässigbaren Grenzen bleibt. Wie aus Figur 2 weiter erkennbar ist, kann der Steg 22 zur Bewerkstelligung ausreichend breiter Sitzflächen achsseitig und mantelseitig mit Flanschringen 23 bzw. 24 versehen sein, die wie die Gelenklager 12 achsseitig und mantelseitig auf Schiebesitz gearbeitet sind. Die Montage und die Lagesicherung der Flachfederelemente 21 kann zweckmäßig in derselben Weise erfolgen, wie weiter oben für die Gelenklager 12 beschrieben ist.

Bei Verwendung von Flachfederelementen hier dargestellter Art ist die den Mantel 8 abstützende Achse 10 zweckmäßig in Umfangsrichtung drehbar gelagert.

Patentansprüche

1) Zylinder für eine Druckmaschine, insbesondere Presseur für eine Tiefdruckmaschine, mit einem rohrförmig ausgebildeten Mantel (8), der auf einem durchgehenden Kern (10) abgestützt und unabhängig von diesem verformbar ist, mit welchem er durch zwei symmetrisch zur Maschinenmitte angeordnete, in radialer Richtung drucksteife Gelenkverbindungen (12, 21), die einen zum Ausgleich der unterschiedlichen Verformungen von Mantel (8) und Kern (10) ausreichenden Schwenkwinkelbereich besitzen, verbunden ist und der die Kräfte zum Anpressen des Mantels (8) an den hiermit zusammenwirkenden Zylinder (2) aufnimmt, dadurch gekennzeichnet, daß der Mantel (8) ausschließlich durch die beiden Gelenkverbindungen (12, 21), die lediglich einen solchen, gegenüber der Mantellänge verhältnismäßig kleinen gegenseitigen Abstand aufweisen, daß Taumelbewegungen der abstützungslosen Mantelränder vermieden sind, auf dem Kern (10) abgestützt und ausschließlich hierüber mittels der im Bereich der Maschinenseitenwandungen (1) auf den Kern (10) aufbringbaren Stellkräfte (4) an den zugeordneten Zylinder (2) anpreßbar ist.

2) Zylinder nach Anspruch 1, dadurch gekennzeichnet, daß die Gelenkverbindungen als mit Notlaufeigenschaften versehene Gelenklager (12) ausgebildet sind.

3) Zylinder nach wenigstens einem der vorhergehenden Ansprüche, dadurch gekennzeichnet, daß der Kern (10) als in Umfangsrichtung starr gelagerte Achse ausgebildet ist.

4) Zylinder nach Anspruch 1, dadurch gekennzeichnet, daß die Gelenkverbindungen als hydrostatische Gleitlager mit jeweils zwei Lagerringen (14, 15) ausgebildet sind.

5) Zylinder nach Anspruch 1, dadurch gekennzeichnet, daß die Gelenkverbindungen jeweils als Flachfederelement (21) mit einem scheibenförmigen Federsteg (22) ausgebildet sind.

6) Zylinder nach Anspruch 5, dadurch gekennzeichnet, daß der Steg (22) achsseitig und mantelseitig einen Flansch (23 bzw. 24) aufweist.

7) Zylinder nach wenigstens einem der vorhergehenden Ansprüche, dadurch gekennzeichnet, daß die Gelenklager (12) bzw. die Flachfederelemente (21) einerseits durch einen mittleren, radial nach innen vorstehenden Bund (16) des Mantels (8) und andererseits durch jeweils eine seitlich auf den Kern (10) aufsteckbare Büchse (17) in axialer Richtung gesichert sind.

0011226

8) Zylinder nach Anspruch 7, dadurch gekennzeichnet, daß die Büchse (17) im Bereich der Mantelstirnseiten auf dem Kern (10) fixiert ist und in diesem Bereich eine radiale Verstärkung (19) aufweist, deren äußere Stirnseite (20) mit einer gegenüber der axialen Abstufung im Bereich der Lagerringe (14, 15) bzw. im Bereich der Flachfederelemente (21) umgekehrten axialen Abstufung versehen ist.

9) Zylinder nach Anspruch 7 und 8, dadurch gekennzeichnet, daß die Büchse (17) mittels eines Flanschrings (18) auf dem Kern (10) fixiert ist.

10) Zylinder nach wenigstens einem der vorhergehenden Ansprüche, dadurch gekennzeichnet, daß seine Form- und/oder Materialkonstanten so gewählt sind, daß bei einem zum Verhindern von Taumelbewegungen der Mantelenden ausreichenden Abstand der Gelenkverbindungen (12, 21) von der Zylindermitte die beim Anstellen der Zylinder sich ergebenden Biegelinien von Mantel (8) und hieran anliegendem Zylinder (2) identisch sind.

FIG 1

FIG 2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 291 402 (LES ATELIERS DE CONSTRUCTION MECANIQUES C & A HOLWEG S.A.) <br> * Das ganze Dokument * | 1-3,7 |
| | DE - A - 1 710 498 (KRANTZ) <br> * Das ganze Dokument * | 1,2,7 |
| | CH - A - 378 600 (MASCHINENFABRIK BENNINGER A.G.) <br> * Das ganze Dokument * | 1,2 |
| | FR - A - 1 397 496 (NEYRPIC) <br> * Das ganze Dokument * | 1,2 |
| | DE - A - 1 450 062 (VEB FORDERAN-LAGEN CALBE) <br> *. Das ganze Dokument * | 1,5 |
| A | DE - B - 1 279 042 (KUSTERS) <br> * Das ganze Dokument * | 1 |
| AD | & US - A - 3 685 443 | |
| A | GB - A - 893 777 (LINOTYPE) <br> * Das ganze Dokument * | 1 |

./.

**KLASSIFIKATION DER ANMELDUNG (Int.Cl. 3)**

B 41 F 13/18
F 16 C 13/00

**RECHERCHIERTE SACHGEBIETE (Int. Cl. 3)**

B 41 F

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-01-1980 | MEULEMANS |

EPA form 1503.1  06.78

**Europäisches Patentamt**

**EUROPÄISCHER RECHERCHENBERICHT**

| | EINSCHLÄGIGE DOKUMENTE | | KLASSIFIKATION DER ANMELDUNG (Int.Cl ³) |
|---|---|---|---|
| Kategorie | Kennzeichnung des Dokuments mit Angabe, soweit erforderlich, der maßgeblichen Teile | betrifft Anspruch | |
| A | US - A - 3 513 519 (SAVELA) <br> * Das ganze Dokument * <br><br> -- | 1 | |
| A | DE - B - 1 240 028 (INDUSTRIAL OVENS) <br> * Das ganze Dokument * <br><br> -- | 1 | |
| XP | DE - U - 7 833 721 (ALBERT FRANKENTAAL) <br> * Anspruch 1 * <br><br> ---- | 1 | RECHERCHIERTE SACHGEBIETE (Int. Cl. ³) |

EPA Form 1503.2 06.78